# EUROPEAN PATENT SPECIFICATION

(11) **EP 3 688 329 B1**
(45) Date of publication and mention of the grant of the patent: **28.09.2022**
(21) Application number: 17777271.2
(22) Date of filing: 29.09.2017
(51) Int. Cl.: F16C 33/76, F16C 41/00, F16C 19/06

(54) **BEARING, COMPRISING AN INNER RING, AN OUTER RING AND A SENSOR, AND SYSTEM, COMPRISING SUCH A BEARING**
LAGER MIT INNENRING, AUSSENRING UND SENSOR UND SYSTEM MIT SOLCH EINEM LAGER
PALIER, COMPRENANT UNE BAGUE INTERNE, UNE BAGUE EXTERNE ET UN CAPTEUR, ET SYSTÈME COMPRENANT UN TEL PALIER

(43) Date of publication of application: 05.08.2020
(73) Proprietor: HELLA GmbH & Co. KGaA, 59552 Lippstadt (DE); Schaeffler Technologies AG & Co. KG, 91074 Herzogenaurach (DE)
(72) Inventor: OBERMANN, Patrick, 59581 Warstein (DE); SEIFFERT, Marc, 59557 Lippstadt (DE); BARTSCHT, Manfred, 33154 Salzkotten (DE); HARTMANN, Horst, 91086 Aurachtal (DE); ARENZ, Verena, 90542 Eckental (DE); SCHAMIN, Alexander, 90522 Oberasbach (DE)
(74) Representative: Schäperklaus, Jochen
(86) International application number: PCT/EP2017/074824
(87) International publication number: WO 2019/063095

(56) References cited:
- EP-A1- 0 652 438
- CN-A- 101 144 506
- FR-A1- 2 574 501
- JP-A- 2007 139 075
- US-A- 5 898 388

## Description

The present invention relates to a bearing according to the preamble of claim 1 and to a system according to the preamble of claim 10.

Such bearings and systems are already known in different embodiments.

From the EP 2 644 921 A1 a system is known, comprising a torque-proof part and a rotating part rotatable relative to said torque-proof part and a bearing comprising an inner ring and an outer ring, whereat said outer ring is torque-proof connected to said torque-proof part and said inner ring is torque-proof connected to said rotating part. Said bearing of said known system, comprises said inner ring and said outer ring rotatable relative to said inner ring, a sensor for detecting a measured variable corresponding to a rotation of said outer ring relative to said inner ring, whereat said sensor comprises a stator and a rotor.

A bearing with the features of the preamble of claim 1 is disclosed in CN 101 144 506 A, see in particular fig. 8 of CN 101 144 506 A.

It is an object of the invention to provide a system and a bearing with a compact design wherein parts of the sensor may be placed easily according to the inner ring and the outer ring in a sensor area of the bearing.

This object is solved by a bearing according to claim 1, wherein said sensor is built as an inductive sensor and said stator is torque-proof connected to said inner ring and said rotor is torque-proof connected to said outer ring or said stator is torque-proof connected to said outer ring and said rotor is torque-proof connected to said inner ring wherein that said inner ring and said outer ring forming a bearing area for bearing said inner ring relative to said outer ring and a sensor area for supporting said inductive sensor, whereat a spatial dimension of said sensor area is defined by said inner ring and said outer ring, and wherein said bearing area and said sensor area of said bearing are divided by shoulders of said inner ring and said outer ring, whereby
- a spacer is arranged between said stator and said inner ring or said outer ring, to which said stator is torque-proof connected,
- said spacer is positioned next to said shoulder of said inner ring or said outer ring of said bearing in order to keep a defined distance between said shoulder and said stator of said inductive sensor,
- said rotor of said inductive sensor is arranged respectively to said outer ring or inner ring of said bearing next to said shoulder of said inner ring,
- said stator and said rotor of said inductive sensor are positioned to each other by said spacer in a defined distance.

In another embodiment according to claim 10, a system comprising the above bearing is showing torque-proof and rotating parts. Hereby, clearly defined areas for bearing said inner ring relative to said outer ring on the one side and for supporting said inductive sensor on the other side are built. Thus, both areas, said bearing area and said sensor area, can be designed for the specific use.

A main advantage of the bearing and the system according to the invention is, that a more compact design of said bearing and said system is possible. Because of connecting said stator torque-proof to said inner ring and said rotor torque-proof to said outer ring or said stator torque-proof to said outer ring and said rotor torque-proof to said inner ring the inventive design can be much more integral than the known designs. Furthermore, the handling and the manufacture of the inventive bearing and the inventive system are improved.

Basically, said inductive sensor can be of any useful and applicable type, material, dimension and arrangement. Said inductive sensor could be an incremental type inductive sensor, for example an incremental angle sensor in order to detect a rotational speed or to count a number of revolutions of a shaft. Advantageously, said inductive sensor is built as an absolute inductive sensor. That way, it is possible to measure not only a rotational speed or a number of revolutions of a shaft or something similar, but to measure a specific position of said inner ring relative to said outer ring of said bearing. Furthermore, with said inductive sensor being an absolute inductive sensor it is possible to measure a specific position of said inner ring relative to said outer ring of said bearing without even rotating said inner ring relative to said outer ring. With an absolute inductive sensor high resolution measurement of a measured variable is possible, too.

An advantageous development of the aforementioned embodiment is, that said sensor area and said inductive sensor are built and arranged in such a manner, that said stator and said rotor of said inductive sensor are completely received in said sensor area. That way, the handling and the manufacture of said inductive sensor as well as of said bearing are further improved.

A further advantageous development of the bearing according to the invention is, that said inner ring and said outer ring are radially arranged to a center axis of said bearing and electromagnetic coupling elements of said stator and said rotor of said inductive sensor corresponding to each other are arranged substantially perpendicular to said center axis of said bearing. Hereby, the inventive bearing is on the one side quite compact and on the other side there is enough space for said stator and said rotor of said inductive sensor.

Another development of the bearing according to the invention is, that a spacer is arranged between said stator and said inner ring or said outer ring, to which said stator is torque-proof connected. Thus, said spacer is either arranged between said stator and said inner ring or between said stator and said outer ring, depending, whether the stator is connected to said inner ring or to said outer ring. That way, it is quite easy to establish a correct distance between said stator and said rotor of said inductive sensor. Said spacer can be positioned next to said shoulder of said outer ring of said bearing in order to keep a defined distance between said shoulder and said stator of said inductive sensor.

In general, said spacer according to the aforementioned embodiment can be of any useful and applicable type, design, material, dimension and arrangement. Advantageously, said spacer is built like a ring, because of the fact, that a ring is a standard unit and available in a lot of different designs and materials.

In contrast to the aforementioned embodiment another favorable embodiment of the bearing according to the invention comprising a spacer is, that said stator comprises a support, electronics and a casting compound, whereat said electronics are supported by said support and are at least partly covered by said casting compound, and whereat said spacer is built like a sleeve for forming a defined area for said casting compound for sealing said electronics at least in part. Hereby, said spacer is not only for creating a defined distance between said stator and said rotor of said inductive sensor, but also for supporting to cast said casting compound.

Another advantageous development of the bearing according to the invention is, that said stator comprises a support, electronics and a casting compound, whereat said electronics are supported by said support and are at least partly covered by said casting compound, and whereat said support comprises a collar for forming a defined area for said casting compound. Similar to the aforementioned embodiment, said support with said collar supports to cast said casting compound for sealing said electronics at least in part.

A further advantageous development of the bearing according to the invention is, that said bearing comprises a seal, which is built and arranged in such a manner, that said inductive sensor is sealed relative to an environment of said bearing. Therefore, the inductive sensor is completely sealed relative to an environment of said bearing.

Analog to the advantageous development of the bearing mentioned before, an advantageous development of the system according to the invention is, that said system comprises a seal, which is built and arranged in such a manner, that said inductive sensor is sealed relative to an environment of said bearing.

A particular advantageous development of the bearing according to the invention is, that said bearing comprises an electromagnetic element, which is built and arranged in such a manner, that a defined electromagnetic environment is formed for said inductive sensor. That way, the electromagnetic parameters of said inductive sensor influenced by said environment can be handled more easily.

Analog to the advantageous development of the bearing mentioned before, an advantageous development of the system according to the invention is, that said system comprises an electromagnetic element, which is built and arranged in such a manner, that a defined electromagnetic environment is formed for said inductive sensor.

The Figures are schematic illustrations of bearings and systems according to the present invention, wherein only the details necessary for the understanding of the invention are shown.

It is shown by:
- Fig. 1: a first embodiment of a bearing and a system according to the invention in an exploded view,
- Fig. 2: said first embodiment of a bearing and a system in a sectional view,
- Fig. 3: a second embodiment of a bearing and a system according to the invention in an exploded view and
- Fig. 4: said second embodiment of a bearing and a system in a sectional view.

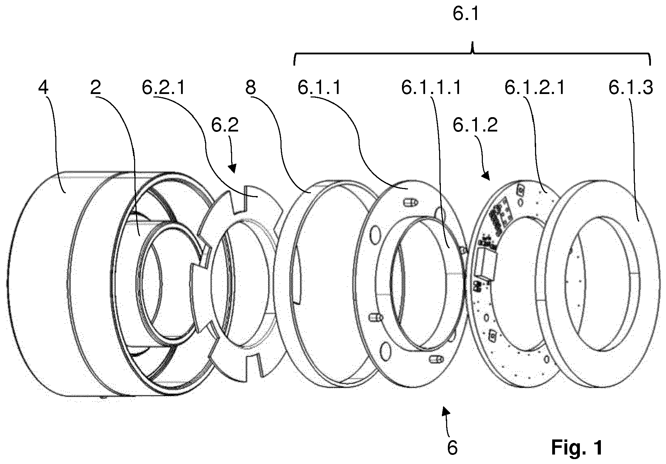

Fig. 1 displays a first embodiment of a bearing and a system according to the invention, comprising an inner ring 2 and an outer ring 4 rotatable relative to said inner ring 2, an inductive sensor 6 for detecting a measured variable corresponding to a rotation of said outer ring 4 relative to said inner ring 2, whereat said inductive sensor 6 comprises a stator 6.1 and a rotor 6.2. Said inductive sensor 6 is built as an absolute inductive sensor 6 for measuring an angular position of said inner ring 2 relative to said outer ring 4 of said bearing. Thus, said position of said inner ring 2 relative to said outer ring 4 is said measured variable corresponding to a rotation of said outer ring 4 relative to said inner ring 2.

Said bearing is built like a ball bearing and connected with said inner ring 2 to a rotational shaft and with said outer ring 4 to a housing. Said housing and said shaft relative rotatable to said housing are not displayed. The aforementioned components, namely said bearing, said housing and said shaft are parts of a system according to the invention, comprising a torque-proof part, namely said housing, and a rotating part rotatable relative to said torque-proof part, namely said shaft, and said bearing comprising said inner ring 2 and said outer ring 4, whereat said outer ring 4 is torque-proof connected to said torque-proof part and said inner ring 2 is torque-proof connected to said rotating part.

Said stator 6.1 of said inductive sensor 6 comprises a support 6.1.1, electronics 6.1.2 and a casting compound 6.1.3, whereat said electronics 6.1.2 are supported by said support 6.1.1 and are at least partly covered by said casting compound 6.1.3. Said electronics 6.1.2 of said stator 6.1 comprising electromagnetic coupling elements for electromagnetic coupling with said rotor 6.2 known to a person skilled in the art, for example transmitter tracks and receiver tracks arranged on a surface of a printed circuit board 6.1.2.1 of said electronics 6.1.2. Said electromagnetic coupling elements of said stator 6.1 are not displayed. In order to cast said casting compound 6.1.3 of said stator 6.1 more easily, said support 6.1.1 of said stator 6.1 comprises a collar 6.1.1.1 for forming a defined area for said casting compound 6.1.3. Said stator 6.1 is torque-proof connected to said outer ring 4 of said bearing, whereas said rotor 6.2 is torque-proof connected to said inner ring 2 of said bearing.

Connecting said stator 6.1 of said inductive sensor 6 to said torque-proof outer ring 4, thus to said torque-proof part, namely said housing, is advantages compared to connecting said stator 6.1 of said inductive sensor 6 to said rotatable inner ring 2, thus to said rotating part, namely said shaft, because of an easy design of an electronic connection of said electronics 6.1.2 of said stator 6.1 via wire. In order to keep a defined space between said stator 6.1 and said rotor 6.2 of said inductive sensor 6 said bearing comprises a spacer 8, too. Said spacer 8 is built like a ring 8 and made from a plastic material in order not to influence said electromagnetic coupling between said stator 6.1 and said rotor 6.2 of said inductive sensor 6.

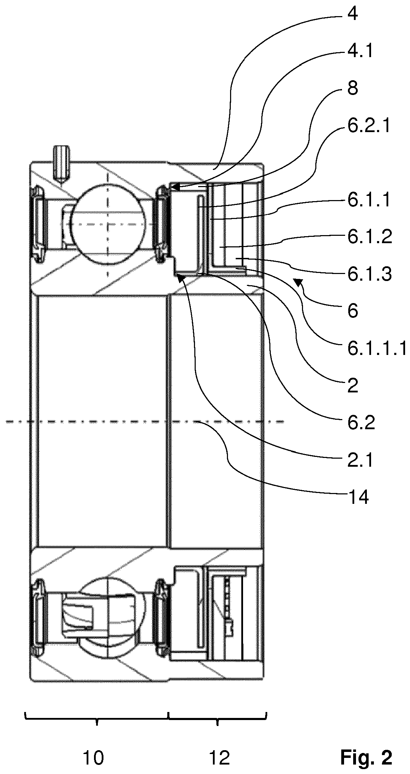

In Fig. 2 the bearing according to the first embodiment is displayed in an assembled state. As can be seen clearly from Fig. 2, said inner ring 2 and said outer ring 4 are forming a bearing area 10 for bearing said inner ring 2 relative to said outer ring 4 and a sensor area 12 for supporting said inductive sensor 6, whereat a spatial dimension of said sensor area 12 is defined by said inner ring 2 and said outer ring 4 of said bearing. Said inner ring 2 and said outer ring 4 are each built as a single piece and radially arranged to a center axis 14 of said bearing. In order to form said bearing area 10 and said sensor area 12, said inner ring 2 and said outer ring 4 are, compared to a standard bearing, e.g. a ball bearing, extended parallel to said center axis 14 of said bearing. Said bearing area 10 and said sensor area 12 of said bearing are divided by shoulders 2.1, 4.1 of said inner ring 2 and said outer ring 4.

Said spacer 8 is positioned next to said shoulder 4.1 of said outer ring 4 of said bearing in order to keep a defined distance between said shoulder 4.1 and said stator 6.1 of said inductive sensor 6. Said rotor 6.2 of said inductive sensor 6 is arranged to said inner ring 2 of said bearing next to said shoulder 2.1 of said inner ring 2. Thus, said stator 6.1 and said rotor 6.2 of said inductive sensor 6 are positioned to each other by said spacer 8 in a defined distance.

Said stator 6.1 is arranged to said spacer 8 via said support 6.1.1 of said stator 6.1. Said electronics 6.1.2 of said stator 6.1 are arranged on said support 6.1.1 and are at least partly covered by said casting compound 6.1.3 of said stator 6.1. In order to cast said casting compound 6.1.3, said casting compound 6.1.3 is put into an area defined by said support 6.1.1 with said collar 6.1.1.1 and said outer ring 4 of said bearing.

As can be seen best from Fig. 2, said sensor area 12 and said inductive sensor 6 are built and arranged in such a manner, that said stator 6.1 and said rotor 6.2 of said inductive sensor 6 are completely received in said sensor area 12. Furthermore, Fig. 2 displays clearly, that said electromagnetic coupling elements of said stator 6.1 and said rotor 6.2, namely wings 6.2.1 of said rotor 6.2, of said inductive sensor 6 corresponding to each other are arranged substantially perpendicular to said center axis 14 of said bearing.

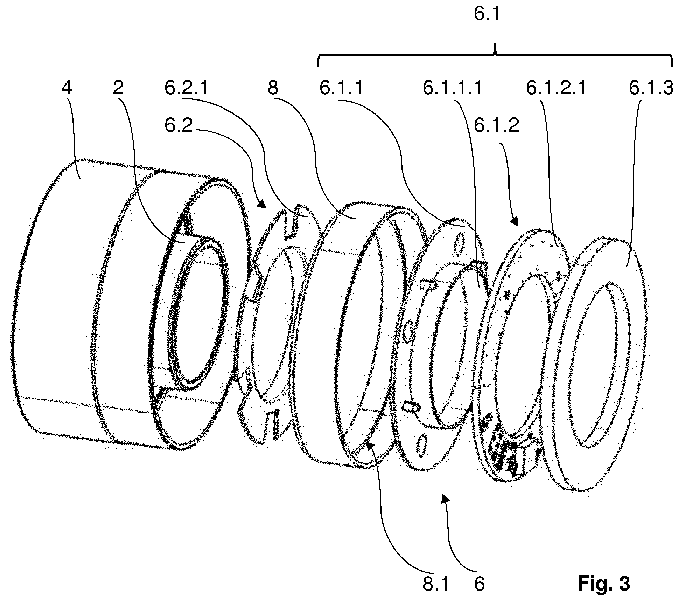

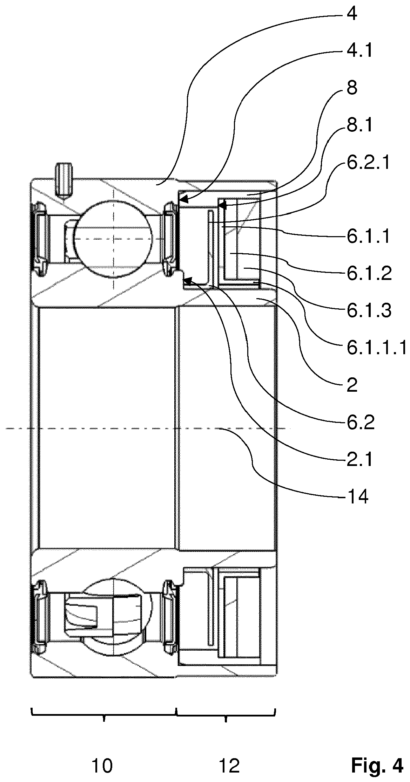

Fig. 3 and 4 display a second embodiment of a bearing and a system according to the invention. In the following, only the differences between the first embodiment according to Fig. 1 and 2 and the second embodiment according to Fig. 3 and 4 are discussed. Similar or equal parts are labelled with the same reference numbers in the Figures.

In comparison to the first embodiment, the second embodiment according to Fig. 3 and 4 does have a different spacer 8. Said spacer 8 according to the second embodiment is built like a sleeve for forming a defined area for said casting compound 6.1.3 of said stator 6.1 of said inductive sensor 6. Thus, said casting compound 6.1.3 at least partly covering said electronics 6.1.2 of said stator 6.1 is being put into an area defined by said support 6.1.1 with said collar 6.1.1.1 and said sleeve 8. This can be seen best in Fig. 4. Said sleeve 8 comprises a shoulder 8.1 in order to create a defined distance between said stator 6.1 and said rotor 6.2 of said bearing according to the second embodiment of the invention. Said support 6.1.1 of said stator 6.1 is in contact to said shoulder 8.1 of said sleeve 8, thus providing a defined distance between said stator 6.1, comprising said support 6.1.1, said electronics 6.1.2 and said casting compound 6.1.3, and said shoulder 4.1 of said outer ring 4 and therefore providing a defined distance between said stator 6.1 and said rotor 6.2 of said inductive sensor 6.

The invention is not limited to the exemplary embodiments discussed above.

The bearing can be of any useful and applicable type, material, dimension and arrangement to a torque-proof part and a rotating part rotatable relative to said torque-proof part. The same is true for the spacer, which could be built like a radial shaft sealing ring or something similar. The inductive sensor does not have to be an absolute inductive sensor, but can be an incremental inductive sensor, too.

For example, the bearing can be built as a wheel bearing for detecting an angular position of the wheels of a car or something similar, the wheel bearing is incorporated in.

Furthermore, the measured variable is not limited to a rotational position of the inner ring relative to the outer ring of the bearing. Any useful and applicable measured variable corresponding to a rotation of said outer ring relative to said inner ring of the bearing is possible.

For instance, the aforementioned wheel bearing can be used in order to determine a wheel speed or even a more indirect measured variable corresponding to a rotation of the wheel like a position of a car or something similar. The detected position of the car by detecting the position of the wheels could be used for applications in the field of autonomous driving. Because of the fact, that the inductive sensor of the inventive bearing and the inventive system is far more precise than other sensors normally used as wheel sensors, the inventive system and the inventive bearing are satisfying the needs of the autonomous driving because of that high-resolution detection.

The stator and the rotor of the inductive sensor does not have to be arranged completely inside a sensor area, which spatial dimension is defined by the inner ring and the outer ring of the bearing according to the invention. Moreover, the stator could be torque-proof connected to said inner ring and said rotor could be torque-proof connected to said outer ring, too. Connecting said stator of said inductive sensor to said torque-proof outer ring, thus to said torque-proof part, namely said housing, is advantages compared to connecting said stator of said inductive sensor to said rotatable inner ring, thus to said rotating part, namely said shaft, because of an easy design of an electronic connection of said electronics of said stator via wire. Of course, other arrangements of said stator and said rotor of said inductive sensor and other technics of an electronic connection between said electronics of said stator and an environment of said inventive bearing and said inventive system are possible, too.

In contrast to the two embodiments of the invention explained in detail, it is possible, that the electromagnetic coupling elements of the stator and the rotor of the inductive sensor are arranged substantially in parallel to a center axis of the bearing, while the inner ring and the outer ring are radially arranged to the center axis of the bearing. For example, said electromagnetic coupling element of said stator could be arranged on a surface of a flexible printed circuit board, which is connected to a surface of said inner ring or said outer ring of said bearing circumferentially arranged to said center axis of said bearing and said electromagnetic coupling element of said rotor could be arranged to said outer ring or to said inner ring of said bearing, corresponding to said inner ring or to said outer ring said stator is connected to, and circumferentially arranged to said center axis of said bearing.

The torque-proof connection of the stator and the rotor to the corresponding inner ring and outer ring can be of any useful and applicable type known to the person skilled in the art. The same is true for the casting compound and the casting of the casting compound.

Unlike the two embodiments of the invention discussed above, it is possible, that the bearing comprises a seal, which is built and arranged in such a manner, that the inductive sensor is sealed relative to an environment of the bearing. Similar is true for a system according to the invention, wherein the system comprises a seal, which is built and arranged in such a manner, that the inductive sensor is sealed relative to an environment of the bearing. Therefore, not only the inductive sensor is sealed relative to an environment of the bearing, but also the interior of the bearing comprising the inductive sensor.

Furthermore, it is possible, that the bearing comprises an electromagnetic element, which is built and arranged in such a manner, that a defined electromagnetic environment is formed for the inductive sensor and/or that the system comprises an electromagnetic element, which is built and arranged in such a manner, that a defined electromagnetic environment is formed for the inductive sensor. That way, the quite undefined electromagnetic environment of the bearing without employing such an electromagnetic element is replaced by a quite defined electromagnetic environment established by using an electromagnetic element, which electromagnetic parameters are known to the designer of the bearing or the system, which comprises the bearing.

For example, said electromagnetic element could be built like a ring-shaped metal plate which substantially covers an interior of said bearing and therefore said inductive sensor relative to said environment with unknown electromagnetic conditions.

Furthermore, said electromagnetic element and said seal could be built like a combined element, thus merging both functions into one single part.

By employing the bearing or the system with the bearing according to the invention a more compact design of a bearing and a system with a sensor for detecting a measured variable corresponding to a rotation of the outer ring relative to the inner ring of the bearing is possible. Furthermore, the handling and the manufacture of the inventive bearing and the inventive system are improved.

### List of reference numbers

- 2: Inner ring of the bearing, built like a ball bearing
- 2.1: Shoulder of the inner ring 2
- 4: Outer ring of the bearing
- 4.1: Shoulder of the outer ring 4
- 6: Inductive sensor, built like an absolute inductive sensor
- 6.1: Stator of the inductive sensor 6
- 6.1.1: Support of the stator 6.1
- 6.1.1.1: Collar of the support 6.1.1
- 6.1.2: Electronics of the stator 6.1
- 6.1.2.1: Printed circuit board of the electronics 6.1.2
- 6.1.3: Casting compound of the stator 6.1
- 6.2: Rotor of the inductive sensor 6
- 6.2.1: Wings of the rotor 6.2
- 8: Spacer of the bearing
- 8.1: Shoulder of the spacer 8 (only second embodiment)
- 10: Bearing area of the bearing
- 12: Sensor area of the bearing
- 14: Center axis of the bearing

## Claims

1. Bearing, comprising an inner ring (2) and an outer ring (4) rotatable relative to said inner ring (2), a sensor (6) for detecting a measured variable corresponding to a rotation of said outer ring (4) relative to said inner ring (2), whereat said sensor (6) comprises a stator (6.1) and a rotor (6.2),
wherein said sensor (6) is built as an inductive sensor (6) and said stator is torque-proof connected to said inner ring and said rotor is torque-proof connected to said outer ring or said stator (6.1) is torque-proof connected to said outer ring (4) and said rotor (6.2) is torque-proof connected to said inner ring (2),
wherein said inner ring (2) and said outer ring (4) forming a bearing area (10) for bearing said inner ring (2) relative to said outer ring (4) and a sensor area (12) for supporting said inductive sensor (6), whereat a spatial dimension of said sensor area (12) is defined by said inner ring (2) and said outer ring (4), said bearing area (10) and said sensor area (12) of said bearing are divided by shoulders (2.1, 4.1) of said inner ring (2) and said outer ring (4)
**characterized in that**
- a spacer (8) is arranged between said stator (6.1) and said inner ring or said outer ring (4), to which said stator (6.1) is torque-proof connected,
- said spacer (8) is positioned next to said shoulder (2.1, 4.1) of said inner ring (2) or said outer ring (4) of said bearing in order to keep a defined distance between said shoulder (2.1, 4.1) and said stator (6.1) of said inductive sensor (6),
- said rotor (6.2) of said inductive sensor (6) is arranged respectively to said outer ring (4) or inner ring (2) of said bearing next to said shoulder (4.1, 2.1) of said inner ring (2),
- said stator (6.1) and said rotor (6.2) of said inductive sensor (6) are positioned to each other by said spacer (8) in a defined distance.

2. Bearing according to claim 1,
wherein
said inductive sensor (6) is built as an absolute inductive sensor (6).

3. Bearing according to claim 1 or 2,
wherein
said sensor area (12) and said inductive sensor (6) are built and arranged in such a manner, that said stator (6.1) and said rotor (6.2) of said inductive sensor (6) are completely received in said sensor area (12).

4. Bearing according to one of the claims 1 to 3,
wherein
said inner ring (2) and said outer ring (4) are radially arranged to a center axis (14) of said bearing and electromagnetic coupling elements (6.2) of said stator (6.1) and said rotor (6.2) of said inductive sensor (6) corresponding to each other are arranged substantially perpendicular to said center axis (14) of said bearing.

5. Bearing according to one of the claims 1 to 4,
wherein
said spacer (8) is built like a ring (8).

6. Bearing according to one of the claims 1 to 4,
wherein
said stator (6.1) comprises a support (6.1.1), electronics (6.1.2) and a casting compound (6.1.3), whereat said electronics (6.1.2) are supported by said support (6.1.1) and are at least partly covered by said casting compound (6.1.3), and whereat said spacer (8) is built like a sleeve (8) for forming a defined area for said casting compound (6.1.3).

7. Bearing according to one of the claims 1 to 6,
wherein
said stator (6.1) comprises a support (6.1.1), electronics (6.1.2) and a casting compound (6.1.3), whereat said electronics (6.1.2) are supported by said support (6.1.1) and are at least partly covered by said casting compound (6.1.3), and whereat said support (6.1.1) comprises a collar (6.1.1.1) for forming a defined area for said casting compound (6.1.3).

8. Bearing according to one of the claims 1 to 7,
wherein
said bearing comprises a seal, which is built and arranged in such a manner, that said inductive sensor is sealed relative to an environment of said bearing.

9. Bearing according to one of the claims 1 to 8,
wherein
said bearing comprises an electromagnetic element, which is built and arranged in such a manner, that a defined electromagnetic environment is formed for said inductive sensor.

10. System, comprising a torque-proof part and a rotating part rotatable relative to said torque-proof part and a bearing comprising an inner ring (2) and an outer ring (4), whereat said outer ring (4) is torque-proof connected to said torque-proof part and said inner ring (2) is torque-proof connected to said rotating part or whereat said outer ring is torque-proof connected to said rotating part and said inner ring is torque-proof connected to said torque-proof part,
wherein
said bearing is built like the bearing according to one of the claims 1 to 9.

11. System according to claim 10,
wherein said system comprises a seal, which is built and arranged in such a manner, that said inductive sensor is sealed relative to an environment of said bearing.

12. System according to claim 10 or 11,
wherein
said system comprises an electromagnetic element, which is built and arranged in such a manner, that a defined electromagnetic environment is formed for said inductive sensor.

## Patentansprüche

1. Lager, das einen Innenring (2) und einen Außenring (4), der in Bezug auf den Innenring (2) drehbar ist, einen Sensor (6) zum Erfassen einer gemessenen Variablen, die einer Drehung des Außenrings (4) in Bezug auf den Innenring (2) entspricht, umfasst, wobei der Sensor (6) einen Stator (6.1) und einen Rotor (6.2) umfasst, wobei der Sensor (6) als ein induktiver Sensor (6) ausgeführt ist, und der Stator drehfest mit den Innenring verbunden ist und der Rotor drehfest mit dem Außenring verbunden ist oder der Stator (6.1) drehfest mit dem Außenring (4) verbunden ist und der Rotor (6.2) drehfest mit dem Innenring (2) verbunden ist,
wobei der Innenring (2) und der Außenring (4) einen Lagerbereich (10) zum Lagern des Innenrings (2) in Bezug auf den Außenring (4) bilden, und einen Sensorbereich (12) zum Tragen des induktiven Sensors (6), wobei eine räumliche Dimension des Sensorbereich (12) von dem Innenring (2) und dem Außenring (4) definiert ist, wobei der Lagerbereich (10) und der Sensorbereich (12) des Lagers von Schultern (2.1, 4.1) des Innenrings (2) und des Außenrings (4) geteilt sind, **dadurch gekennzeichnet, dass**
- ein Abstandhalter (8) zwischen dem Stator (6.1) und dem Innenring oder dem Außenring (4), an dem der Stator (6.1) drehfest verbunden ist, eingerichtet ist,
- wobei der Abstandhalter (8) neben der Schulter (2.1, 4.1) des Innenrings (2) oder des Außenrings (4) des Lagers positioniert ist, um einen definierten Abstand zwischen der Schulter (2.1, 4.1) und dem Stator (6.1) des induktiven Sensors (6) zu halten,
- der Rotor (6.2) des induktiven Sensors (6) jeweils zu dem Außenring (4) oder Innenring (2) des Lagers neben der Schulter (4.1, 2.1) des Innenrings (2) eingerichtet ist,
- der Stator (6.1) und der Rotor (6.2) des induktiven Sensors (6) zueinander von dem Abstandhalter (8) in einem definierten Abstand positioniert sind.

2. Lager nach Anspruch 1,
wobei
der induktive Sensor (6) als ein absoluter induktiver Sensor (6) ausgeführt ist.

3. Lager nach Anspruch 1 oder 2,
wobei
der Sensorbereich (12) und der induktive Sensor (6) derart ausgeführt und eingerichtet sind, dass der Stator (6.1) und der Rotor (6.2) des induktiven Sensors (6) vollständig in den Sensorbereich (12) aufgenommen sind.

4. Lager nach einem der Ansprüche 1 bis 3,
wobei
der Innenring (2) und der Außenring (4) radial zu einer zentralen Achse (14) des Lagers eingerichtet sind, und elektromagnetische Kopplungselemente (6.2) des Stators (6.1) und des Rotors (6.2) des induktiven Sensors (6), die einander entsprechen, im Wesentlichen senkrecht zu der zentralen Achse (14) des Lagers eingerichtet sind.

5. Lager nach einem der Ansprüche 1 bis 4,
wobei
der Abstandhalter (8) wie ein Ring (8) ausgeführt ist.

6. Lager nach einem der Ansprüche 1 bis 4,
wobei
der Stator (6.1) einen Träger (6.1.1), Elektronik (6. 1. 2) und eine Gussmasse (6.1.3) umfasst, wobei die Elektronik (6.1.2) von dem Träger (6.1.1) gestützt ist und mindestens teilweise von der Gussmasse (6.1.3) abgedeckt ist und wobei der Abstandhalter (8) wie eine Hülse (8) gebildet ist, um eine definierte Fläche für die Gussmasse (6.1.3) zu bilden.

7. Lager nach einem der Ansprüche 1 bis 6,
wobei
der Stator (6.1) einen Träger (6.1.1), Elektronik (6. 1. 2) und eine Gussmasse (6.1.3) umfasst, wobei die Elektronik (6.1.2) von dem Träger (6.1.1) gestützt ist und mindestens teilweise von der Gussmasse (6.1.3) abgedeckt ist und wobei der Träger (6.1.1) einen Kragen (6.1.1.1) zum Bilden einer definierten Fläche der Gussmasse (6.1.3) umfasst.

8. Lager nach einem der Ansprüche 1 bis 7,
wobei
das Lager eine Dichtung umfasst, die derart ausgeführt und eingerichtet ist, dass der induktive Sensor in Bezug auf eine Umgebung des Lagers abgedichtet ist.

9. Lager nach einem der Ansprüche 1 bis 8,
wobei
das Lager ein elektromagnetisches Element umfasst, das derart ausgeführt und eingerichtet ist, dass eine definierte elektromagnetische Umgebung für den induktiven Sensor gebildet ist.

10. System, umfassend ein drehfestes Teil und ein drehendes Teil, das in Bezug auf das drehfeste Teil drehbar ist, und ein Lager, das einen Innenring (2) und einen Außenring (4) umfasst, wobei der Außenring (4) drehfest mit dem drehfesten Teil verbunden ist und der Innenring (2) drehfest mit dem drehenden Teil verbunden ist oder wobei der Außenring drehfest mit dem drehenden Teil verbunden ist und der Innenring drehfest mit dem drehfesten Teil verbunden ist,
wobei
das Lager wie ein Lager nach einem der Ansprüche 1 bis 9 gebaut ist.

11. System nach Anspruch 10,
wobei das System eine Dichtung umfasst, die derart ausgeführt und eingerichtet ist, dass der induktive Sensor in Bezug auf eine Umgebung des Lagers abgedichtet ist.

12. System nach Anspruch 10 oder 11,
wobei
das System ein elektromagnetisches Element umfasst, das derart ausgeführt und eingerichtet ist, dass eine definierte elektromagnetische Umgebung für den induktiven Sensor gebildet ist.

## Revendications

1. Palier, comprenant une bague interne (2) et une bague externe (4) pouvant tourner par rapport à ladite bague interne (2), un capteur (6) pour détecter une variable mesurée correspondant à une rotation de ladite bague externe (4) par rapport à ladite bague interne (2), ledit capteur (6) comprenant un stator (6.1) et un rotor (6.2), dans lequel ledit capteur (6) est réalisé sous la forme d'un capteur inductif (6) et ledit stator est relié solidaire en rotation à ladite bague interne et ledit rotor est relié solidaire en rotation à ladite bague externe ou ledit stator (6.1) est relié solidaire en rotation à ladite bague externe (4) et ledit rotor (6.2) est relié solidaire en rotation à ladite bague interne (2),
dans lequel ladite bague interne (2) et ladite bague externe (4) forment une zone de palier (10) pour porter ladite bague interne (2) par rapport à ladite bague externe (4) et une zone de capteur (12) pour supporter ledit capteur inductif (6), une dimension spatiale de ladite zone de capteur (12) étant définie par ladite bague interne (2) et ladite bague externe (4), ladite zone de palier (10) et ladite zone de capteur (12) dudit palier sont divisées par des épaulements (2.1, 4.1) de ladite bague interne (2) et de ladite bague externe (4), **caractérisé en ce que**
- un élément d'espacement (8) est agencé entre ledit stator (6.1) et ladite bague interne ou ladite bague externe (4), auquel ledit stator (6.1) est relié solidaire en rotation,
- ledit élément d'espacement (8) est positionné à côté dudit épaulement (2.1, 4.1) de ladite bague interne (2) ou de ladite bague externe (4) dudit palier afin de maintenir une distance définie entre ledit épaulement (2.1, 4.1) et ledit stator (6.1) dudit capteur inductif (6),
- ledit rotor (6.2) dudit capteur inductif (6) est agencé respectivement sur ladite bague externe (4) ou sur ladite bague interne (2) dudit palier à côté dudit épaulement (4.1, 2.1) de ladite bague interne (2),
- ledit stator (6.1) et ledit rotor (6.2) dudit capteur inductif (6) sont positionnés l'un par rapport à l'autre par ledit élément d'espacement (8) à une distance définie.

2. Palier selon la revendication 1,
dans lequel
ledit capteur inductif (6) est réalisé sous la forme d'un capteur inductif absolu (6).

3. Palier selon la revendication 1 ou 2,
dans lequel
ladite zone de capteur (12) et ledit capteur inductif (6) sont réalisés et agencés de telle manière que ledit stator (6.1) et ledit rotor (6.2) dudit capteur inductif (6) sont reçus complètement dans ladite zone de capteur (12).

4. Palier selon l'une quelconque des revendications 1 à 3,
dans lequel
ladite bague interne (2) et ladite bague externe (4) sont agencées radialement par rapport à un axe central (14) dudit palier et des éléments de couplage électromagnétique (6.2) dudit stator (6.1) et dudit rotor (6.2) dudit capteur inductif (6) correspondant l'un à l'autre sont agencés sensiblement perpendiculairement audit axe central (14) dudit palier.

5. Palier selon l'une quelconque des revendications 1 à 4,
dans lequel
ledit élément d'espacement (8) est réalisé sous une forme analogue à une bague (8).

6. Palier selon l'une quelconque des revendications 1 à 4,
dans lequel
ledit stator (6.1) comprend un support (6.1.1), des éléments électroniques (6.1.2) et un composé de moulage (6.1.3), lesdits composants électroniques (6.1.2) étant supportés par ledit support (6.1.1) et étant au moins partiellement recouverts par ledit composé de moulage (6.1.3) et ledit élément d'espacement (8) étant réalisé sous une forme analogue à un manchon (8) pour former une zone définie pour ledit composé de moulage (6.1.3).

7. Palier selon l'une quelconque des revendications 1 à 6,
dans lequel
ledit stator (6.1) comprend un support (6.1.1), des composants électroniques (6.1.2) et un composé de moulage (6.1.3), lesdits composants électroniques (6.1.2) étant supportés par ledit support (6.1.1) et étant au moins partiellement recouverts par ledit composé de moulage (6.1.3), et ledit support (6.1.1) comprenant un collier (6.1.1.1) pour former une zone définie pour ledit composé de moulage (6.1.3).

8. Palier selon l'une quelconque des revendications 1 à 7,
dans lequel
ledit palier comprend un joint d'étanchéité, qui est réalisé et agencé de telle manière que ledit capteur inductif est rendu étanche par rapport à un environnement dudit palier.

9. Palier selon l'une quelconque des revendications 1 à 8,
dans lequel
ledit palier comprend un élément électromagnétique, qui est réalisé et agencé de telle manière qu'un environnement électromagnétique défini est formé pour ledit capteur inductif.

10. Système comprenant une pièce solidaire en rotation et une pièce rotative pouvant tourner par rapport à ladite pièce solidaire en rotation et un palier comprenant une bague interne (2) et une bague externe (4), ladite bague externe (4) étant reliée solidaire en rotation à ladite pièce solidaire en rotation et ladite bague interne (2) étant reliée solidaire en rotation à ladite pièce rotative ou ladite bague externe étant reliée solidaire en rotation à ladite pièce rotative et ladite bague interne étant reliée solidaire en rotation à ladite partie solidaire en rotation,
dans lequel
ledit palier est réalisé sous une forme analogue au palier selon l'une quelconque des revendications 1 à 9.

11. Système selon la revendication 10,
dans lequel ledit système comprend un joint d'étanchéité, qui est réalisé et agencé de telle manière que ledit capteur inductif est rendu étanche par rapport à un environnement dudit palier.

12. Système selon la revendication 10 ou 11,
dans lequel
ledit système comprend un élément électromagnétique, qui est réalisé et agencé de telle manière qu'un environnement électromagnétique défini est formé pour ledit capteur inductif.
